# EUROPEAN PATENT SPECIFICATION

(11) **EP 4 450 193 B1**
(45) Date of publication and mention of the grant of the patent: **04.02.2026**
(21) Application number: 23168255.0
(22) Date of filing: 17.04.2023
(51) Int. Cl.: B23B 13/12, F16L 37/244, F16L 37/248

(54) **SPINDLE LINER ARRANGEMENT FOR A MACHINE TOOL**
SPINDELAUSKLEIDUNGSANORDNUNG FÜR EINE WERKZEUGMASCHINE
AGENCEMENT DE CHEMISE DE BROCHE POUR UNE MACHINE-OUTIL

(43) Date of publication of application: 23.10.2024
(73) Proprietor: Rapid Liners AB, 782 34 Malung (SE)
(72) Inventor: SÄFSTRÖM, Pontus, 782 90 Malung (SE)
(74) Representative: Kransell & Wennborg KB

(56) References cited:
- US-A- 1 148 824
- US-A- 5 649 460
- US-A1- 2002 029 669
- US-A1- 2005 109 175

## Description

### TECHNICAL FIELD

The present disclosure relates generally to the field of machine tools and in particular to an arrangement for the fixation of a spindle liner to the spindle of a machine tool such as a lathe.

### BACKGROUND

Lathes and other machine tools for machining elongate work pieces often comprise a tubular rotating spindle with a chuck for holding the work piece during machining arranged at one end of the spindle. The spindle my exhibit a longitudinal bore extending from the chuck to an opposite feed end where a rod-shaped work piece or stock may be fed into the bore and sequentially fed to the chuck. For allowing rod-shaped stock of different outer diameters to be machined in a satisfactory manner, the spindle may be complemented by an auxiliary and exchangeable spindle liner. The liner may have an outer diameter which corresponds to the inner diameter of the bore and an inner diameter which corresponds to the outer diameter of the work piece which is to be machined. The liner may thus be exchanged when changing the diameter of the work piece to be machined. Buy such an arrangement any radial play between the work piece and the radially supporting surface of the spindle is eliminated. This in turn reduces problems related to so called "whip" and vibrations caused by wobbling of the work piece or stock in the rotating spindle. At some known liners, the outer diameter of the liner is smaller than the inner diameter of the spindle's bore and the liner may then comprise axially spaced, radially supporting bearings which are arranged between the liner and the wall of the bore.

US 2002/0029669 A1 discloses a spindle liner for a lathe. The spindle liner comprises an elongate sleeve member with a central axial opening extending over the entire length of the liner. A circular mounting flange protrudes radially from the liner in proximity to one end. The flange exhibits bolt holes for securing the liner by means of bolts to the back of the lathe.

The exchange of such traditional spindle liners is rather complicated and time consuming since all fixation bolts need to be loosened for removing the liner and thereafter inserted and tightened for securing the new liner. At many workshops where rod shaped work pieces of varying diameters are machined, such time-consuming liner exchange causes considerable unwanted downtime.

US 5,649,460 suggests a quick-change spindle liner assembly. The assembly comprises an annular adapter with a cavity exhibiting a recessed shoulder which adapter is fixed to the lathe around a feed end of the spindle. The spindle liner comprises a tubular sleeve and an external circular flange which is received in the cavity of the adapter and supported in one axial direction by the shoulder. The assembly further comprises radially inwardly projecting retainer lugs arranged at the open end of adapter and corresponding notches formed in the flange for allowing insertion of the flange into the cavity. A spring-loaded pin is threaded into an axial hole in one of the lugs and the flange exhibits a corresponding axial locking hole for receiving a tip of the spring-loaded pin when the flange has been inserted into the cavity and rotated for aligning the pin with the locking hole.

### SUMMARY

An object of the present disclosure is to provide an enhanced spindle liner arrangement for a machine tool such as a lathe.

Another object is to provide such a spindle liner arrangement which allows for quick and effortless exchange of the spindle liner.

A further object is to provide such a spindle liner which may readily be exchanged manually, without the need of any tools.

Yet another object is to provide such a spindle liner which allows for that the liner may be exchanged in an ergonomically advantageous manner.

A further object is to provide such a spindle liner arrangement which is simple in construction and easy to manufacture at a comparatively low cost.

Yet another object is to provide such a spindle liner arrangement which provides secure fixation of the spindle liner to the spindle.

Still another object is to provide such a spindle liner arrangement which comprise a low number of constituent components.

Yet another object is to provide such a spindle liner arrangement which is reliable in use.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

According to a first aspect, the present disclosure provides a spindle liner arrangement as set out in the appended claim 1. The spindle liner arrangement is intended for use with a machine tool such as a lathe which comprises a tubular spindle exhibiting a longitudinal bore and a feed end for inserting and feeding a rod-shaped workpiece into the bore. The spindle liner arrangement comprises a mounting disc arranged to be fixed at the feed end of the spindle which mounting disc exhibits a central mounting disc through opening arranged to lie concentric with the bore when mounted and a plurality of first fixation holes distributed around the mounting disc through opening. A clamping disc exhibits a central clamping disc through opening with an inner clamping disc diameter arranged to lie concentric with the bore when mounted, and a plurality of through penetrating second fixation holes arranged around the central hole. A tubular liner comprises a first longitudinal portion arranged to be received in the bore, a second longitudinal portion arranged to extend longitudinally out from the feed end when mounted and flange member which extends radially outwards from the second portion. The flange member exhibits a plurality of through penetrating third fixation holes distributed around the second portion, each third fixation hole being elongate in the circumferential direction exhibiting a widened portion with a first cross sectional area and narrowed portion with a second cross-sectional area being smaller than said first cross-sectional area. The spindle liner arrangement further comprises; at least one spring element arranged between the mounting disc and the clamping disc for urging the clamping disc longitudinally away from the mounting disc, and a plurality of elongate fixation members, each fixation member comprising a first end arranged to be threadedly engaged with a respective first fixation hole, an intermediate portion arranged to extend through a respective second fixation hole and a second end comprising a head having a third cross sectional area, which third cross-sectional area is smaller than said first cross-sectional area and larger than said second cross-sectional area.

Such a spindle liner arrangement provides a type of spring-loaded bayonet coupling which allows very easy attachment and removal of the spindle liner by hand without the need of any tool. The arrangement also provides secure fixation of the spindle liner when attached to the spindle. Further the arrangement comprises a low number of constituent components and may readily be manufactured at low cost. In particular the arrangement comprises a low number of moving components and is thereby reliable in use with a long service life. The spindle liner also enhances the ergonomic conditions for the operator since it reduces the time needed and the weight to be carried during exchange of the spindle liner.

According to an embodiment the mounting disc may exhibit a plurality of fourth fixation holes distributed around the mounting disc through opening, each fourth fixation hole being arranged to receive a fixation screw extending therethrough and being threadedly engaged with a corresponding internally threaded fixation hole arranged in the feed end of the spindle, around the bore. By this means the mounting plate may readily be fixed to the lathe. This also allows easy preparation of the lathe for use of the spindle liner arrangement since it only requires arranging a number of internally threaded bolt holes at the feed end of the spindle.

The spindle liner arrangement may comprise a plurality of spring elements, each spring element being tubular and receiving the intermediate portion of a respective fixation member.

The narrowed portion of at least one third fixation hole may be arranged in a recess extending from an end surface of the flange member, which end surface faces away from the clamping disc and the mounting disc. By such an arrangement, the head of the fixation member is form-lockingly received in the recess whereby the fixation of the spindle liner in the rotational direction is increased.

Such a recess may tapper in the direction from the narrowed portion of the at least one fixation hole towards said end surface and the head of at least one fixation member may tapper correspondingly. By this means the head of the fixation member is form-lockingly received in the recess also in the axial direction. The fixation of the spindle liner in the axial direction towards the mounting disc is thereby increased such that any axial movement caused by the resilience of the spring member is eliminated.

The mounting disc, the clamping disc and the flange member may be annular.

The mounting disc through opening and the clamping disc through opening may be circular.

Further objects and advantages of the spindle liner arrangement will be apparent from the following description of exemplifying embodiments and from the appended claims.

### BRIEF DESCRIPTION OF THE DRAWINGS

Aspects and embodiments are now described, by way of example, with reference to the accompanying drawings, in which:
Fig. 1 is an exploded view in perspective of a spindle liner arrangement according to a first embodiment.
Fig. 2a is a perspective view illustrating the spindle liner arrangement shown in fig. 1 during attachment of the spindle liner.
Fig. 2b is a perspective view corresponding to fig. 2a illustrating the arrangement when the spindle liner has been fully attached.
Fig. 3 is a section in perspective illustrating a detail of a spindle liner arrangement according to a second embodiment.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

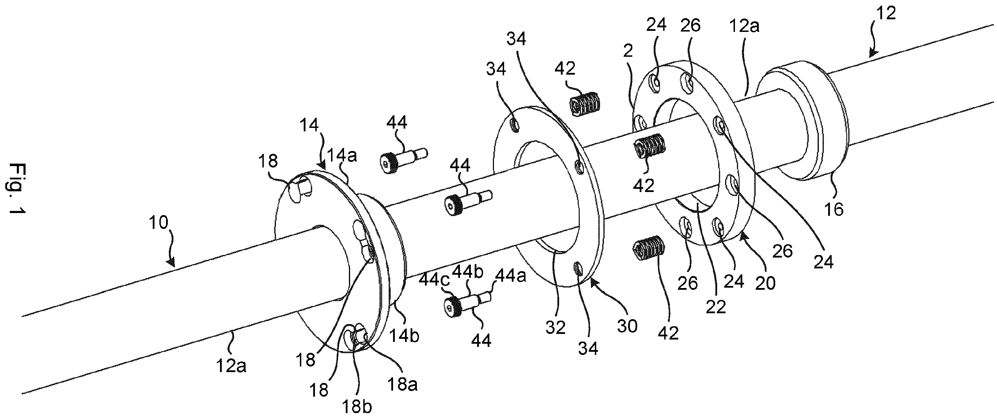

With reference to figs 1-2b an embodiment of the spindle liner arrangement will now be described more in detail. Figs 1-2b illustrate the spindle liner arrangement without showing the lathe or the spindle of the lathe to which the arrangement is intended to be fixed.

The spindle liner arrangement comprises a spindle liner 10, a mounting disc 20 and a clamping disc 30.

The spindle liner 10 comprises a tubular liner 12 exhibiting a first portion 12a which is inserted into the bore of spindle (not shown) and a second portion 12b which extends out from the feed end of the spindle when the spindle liner 10 has been attached to the spindle. The spindle liner 10 is provided with a flange member 14 which is fixed to and extends radially out from the second portion 10b of the tubular liner 10. The flange member 14 exhibits a first axial portion 14a which is annular with a first outer flange diameter and a second axial portion 14b which is arranged at the side of the first axial portion 14a which faces the first portion 12a of the liner 10. The second axial portion 14b has a second outer flange diameter which is smaller than the first flange diameter and essentially equal to the diameter of the spindle's bore (not shown) such that the second axial portion 14b may be received with a close fit in the feed end of the bore (not shown).

In the shown example, the outer diameter of the tubular liner 10 is smaller than the diameter of the spindle's bore (not shown). For this reason, the spindle liner arrangement comprises a number of liner bearings 16 (one shown) which are fixed to the outside of the liner 12 at different axial positions for being radially supported by the wall of the spindle's bore. At other not shown embodiments, the outer diameter of the liner may be essentially equal to the diameter of the bore such that the bearings 16 may be omitted.

The mounting disc 20 is annular with central mounting disc through opening 22 having an inner diameter which is smaller than the first flange diameter but larger than the second flange diameter. The mounting disc 20 further exhibits a plurality of threaded first fixation holes 24 which are evenly distributed around the central opening 22. In the shown example the mounting disc 20 exhibits four first fixation holes 24.

Also the clamping disc 30 is annular with a central clamping disc through opening 32 having an inner diameter which is smaller than the first flange diameter but larger than the second flange diameter. The clamping disc 30 further exhibits a plurality of second fixation holes 34 which are evenly distributed around the central opening 32. In the shown example the mounting disc 30 exhibits four first fixation holes 34 each of which is aligned with a corresponding first fixation hole 24.

The spindle liner arrangement further comprises a plurality of spring elements 42 and a plurality of elongate fixation members 44. In the shown embodiment, there are four spring elements 42 each of which comprises a coil or spiral compression spring which is aligned with a respective first 24 and second 34 fixation hole. There are also provided four elongate fixation members 44 each of which exhibits a first externally threaded end 44a, arranged to be threadedly engaged with a respective first fixation hole 24, an intermediate cylindrical portion 44b arranged to extend through a respective second fixation hole 34 and a second end comprising a head 44c. The intermediate portion 44b of each fixation member is thus received in a corresponding second fixation hole 34 in the clamping disc and the first end 44a is threadedly engaged with a corresponding first fixation hole 24 in the mounting disc 20.

The first wider axial portion 14a of the flange member exhibits a plurality of third fixation holes 18. The number of third fixation holes 18 is equal to the number of first 24 and second 34 fixation holes and to the number of fixation members 44. I.e. in the shown example there are four third fixation holes 18. Each third fixation hole 18 is elongate in the circumferential direction of the annular flange member 14. Each third fixation hole 18 exhibits a widened portion 18a with a first cross sectional area and a second narrowed portion 18b with a second cross sectional area. The widened portion 18a and the narrowed portion 18b are dimensioned to cooperate with the head 44a of the fixation member 44, which head exhibits a third cross-sectional area being smaller that the first cross-sectional area of the widened portion 18a and larger than the second cross-sectional area of the narrowed portion 18b of the third fixation holes 18. Hence, the head 44c of a fixation member 44 may be inserted through the widened portion 18a of a third fixation hole 18. At rotation of the flange member 14, the intermediate portion 44b of the fixation member may be received in first the widened portion 18a and thereafter in the narrowed portion 18b. After such rotation of the flange member 14, the head 44c of the fixation member 44 may not pass through the narrowed portion 18b. Hence, after such rotation the flange member 14 and the entire liner 10 is prevented from moving axially in the direction away from the mounting disc 20, to which the fixation member 44 is fixed.

In the example shown in figs 1-2b the narrowed portion 18b of the third fixation holes 18 is arranged in a cylindrical recess extending into the flange member from the side of the flange member 14 which faces away from the mounting disc 20. The diameter of the recess is essentially equal to or somewhat larger than the diameter of the head 44c of the fixation member 44.

Th mounting disc 20 is further provided with a plurality of fourth fixation holes 26 which are evenly distributed around the central opening 22 of the mounting disc 20. In the shown example there are four fourth fixation holes 26 arranged annularly between the first fixation holes 24. The fourth fixation holes 26 are arranged for the fixation of the mounting disc 20 to the feed end of the spindle (not shown). For this purpose, the radial end surface (not shown) of the spindle exhibits four internally threaded holes and the mounting disc 20 is fixed to the lathe by fixation bolts (not shown) extending through respective fourth fixation holes 26 and being threadedly engaged with corresponding threaded holes in the end surface of the spindle (not shown).

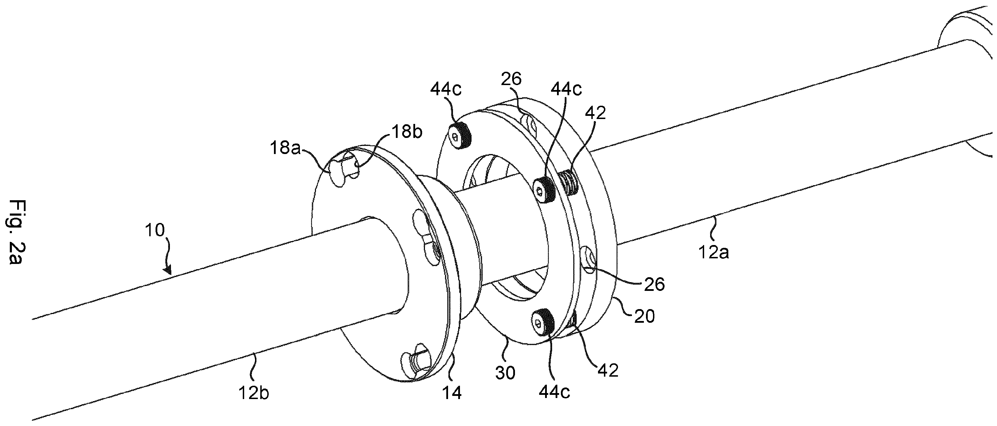

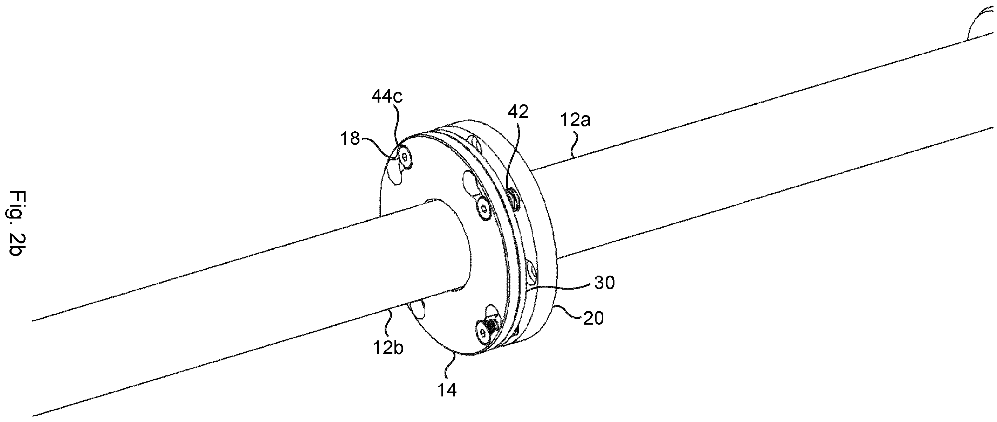

Now with reference to figs 2a and b use of the spindle liner arrangement will be explained. At fig 2a, the mounting disc 20 has been fixed to the end of the spindle (not shown) by fixation bolts (not shown) extending through the fourth fixation holes 26 as described above. The first portion 12a of the tubular liner 12 has been partly inserted into the bore of the spindle (not shown) until the flange member 14 is axially in proximity to the mounting disc 20 and the clamping disc 30. The clamping disc 30 is urged axially away from the mounting disc into contact with the heads 44c of the fixation members 44, by means of the spring elements 42.

Thereafter the spindle liner 10 is rotated such that the widened portions 18a of the third fixation holes 18 in the flange member 14 are aligned with respective heads 44c of the fixation members 44. The spindle liner 10 is thereafter displaced axially further into the spindle (not shown) until the heads 44c completely have passed through and beyond the widened portion 18a of the third fixation holes 18. Hence, the spindle liner 10 is pushed into the bore (not shown) until the heads 44c go free from the surface of the flange member 14 which faces away from the mounting disc 20. During such axial displacement, the spring elements 42 are axially compressed and loaded and the clamping disc 30 is pushed axially towards the mounting disc 20.

From this position, the spindle liner 10 is rotated somewhat in the anticlockwise direction until the narrowed portion 18b of the third fixation holes 18 are aligned with respective heads 44c of the fixation members 44. At this stage, the operator may let go of the spindle liner 10 whereby the spring elements 42 will urge the clamping disc 30 away from the mounting disc 20 and, in contact with the first axial portion 14a of the flange member 14, the spindle liner will be axially displaced away from the mounting disc 20. During the latter axial displacement, the heads 44c of the fixation members 44 will be received in respective cavities in the flange member 14 until the heads come in contact with the bottom of the recess at the narrowed portions 18b of the third fixation holes 18.

The spindle liner arrangement has thereby assumed the fixation position shown in fig 2b. As seen in the figure, the heads 44c of the fixation members are form-lockingly received in respective recesses arranged at the narrowed portion 18b of the third fixation holes 18. In this fixation position, the second axial portion 14b of the flange member 14 is received within the bore of the spindle (not shown) whereby the spindle liner 10 is fixed in the radial directions. Further, axial movement of the spindle liner 10 in the direction away from the mounting disc 20 is prevented by the heads 44c of the fixation members making contact with the bottom of the recesses around the narrowed portions of the third fixation holes 18 in the flange member 18. Additionally, rotational movement in both rotational directions of the spindle liner is prevented by the form-locking reception of the heads 44c in the recesses arranged at the narrowed portions 18b of the third fixation holes 18.

For removing the spindle liner 10 the operations described above are performed in the opposite order. First the spindle liner 10 is pushed axially towards the mounting disc 20 under compression of the spring elements 42. Thereafter, the spindle liner 10 is rotated somewhat in the clockwise direction until the widened portions 18a of the third fixation holes 18 are aligned with the heads 44c of the fixation members 44. Then, the spindle liner 10 may be removed by pulling the first portion 12a of the tubular liner 10 out from the bore of the spindle (not shown).

The spindle liner arrangement thus allows for a very easy and quick attachment and removal of the spindle liner, which may be carried out quickly and fully by hand without the need for any tools or the like.

At the embodiment shown in figs. 1-2b and described above, the spindle liner 10 may be allowed to move somewhat in the axial direction towards the mounting disc 20. Such axial movement may occur since axial forces in this direction is transferred to and absorbed by the spring elements 4. At some applications the spring constant may be selected such that normally occurring axial forces do not cause any significant axial displacement of the spindle liner 10 in normal operation. However, since it is desirable to allow manual compression of the spring elements without the use of any tool, during attachment and removal of the spindle liner 10, there is a limit to how strong the spring elements should be.

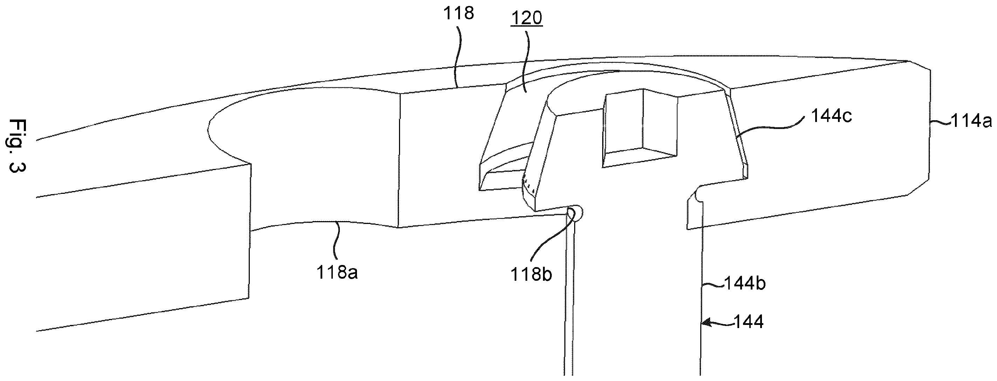

Fig. 3 schematically illustrates a second embodiment of the spindle liner arrangement at which such axial movement is prevented. Fig. 3 illustrates a section through the first axial portion 118a of the spindle liner's flange member and a portion of a fixation member 144. The first axial portion 114a exhibits a third fixation hole 118 which is elongated in the circumferential direction. The third fixation hole 118 exhibits a widened portion 118a and a narrowed portion 118b. The fixation member 144 comprises a head 144c and an intermediate portion 144b.

The narrowed portion 118a is arranged in the flange portion 114a below the bottom of a recess 120 formed in the flange portion 114a. The wall of the recess 120 is conical and tappers in the direction away from the bottom and towards that side of the flange member 114 which faces away from the mounting disc (not shown in fig 3). The head 144c of the fixation member 144 exhibits a corresponding conically tapering shape. When the intermediate portion 114b of the fixation member 144 is received in the narrowed portion 118b of the third fixation hole 118, the correspondingly tapering head 144c and recess 120 prevents movement of the flange member 114 and thereby the entire spindle liner relative to the fixation member 144 and thereby also to the mounting disc also in the axial direction away from the mounting disc.

The arrangement of conical recesses 120 and fixation member heads 144c may be applied to a spindle liner arrangement which in all other aspects corresponds to the embodiment shown in figs 1-2b. Such a spindle liner arrangement thus prevents movement of the spindle liner in all radial directions, both rotational directions and also in both axial directions.

The aspects of the present disclosure have mainly been described above with reference to a few embodiments and examples thereof. However, as is readily appreciated by a person skilled in the art, other embodiments than the ones disclosed above are equally possible within the scope the appended patent claims.

## Claims

1. A spindle liner arrangement for a machine tool such as a lathe, which machine tool comprises a tubular spindle exhibiting a longitudinal bore and a feed end for inserting and feeding a rod-shaped workpiece into the bore, which spindle liner arrangement comprises;
- a mounting disc (20) arranged to be fixed at the feed end of the spindle which mounting disc exhibits a central mounting disc through opening (22) arranged to lie concentric with the bore when mounted and a plurality of first fixation holes (24) distributed around the mounting disc through opening (22),
- a clamping disc (30) exhibiting a central clamping disc through opening (32) with an inner clamping disc diameter arranged to lie concentric with the bore when mounted, and a plurality of through penetrating second fixation holes (34) arranged around the clamping disc through opening (22),
- a tubular liner (12) comprising a first longitudinal portion (12a) arranged to be received in the bore, a second longitudinal portion (12b) arranged to extend longitudinally out from the feed end when mounted and flange member (14) which extends radially outwards from the second portion (12b), wherein
- the flange member (14) exhibits a plurality of through penetrating third fixation holes (18) distributed around the second portion (12b), each third fixation hole (18) being elongate in the circumferential direction exhibiting a widened portion (18a) with a first cross-sectional area and narrowed portion (18b) with a second cross-sectional area being smaller than said first cross-sectional area (18a), and wherein the spindle liner arrangement further comprises;
- at least one spring element (42) arranged between the mounting disc (20) and the clamping disc (30) for urging the clamping disc (30) longitudinally away from the mounting disc (20), and
- a plurality of elongate fixation members (44), each fixation member (44) comprising a first end (44a) arranged to be threadedly engaged with a respective first fixation hole (24), an intermediate portion (44b) arranged to extend through a respective second fixation hole (34) and a second end comprising a head (44c) having a third cross sectional area, which third cross-sectional area is smaller than said first cross-sectional area and larger than said second cross-sectional area.

2. A spindle liner arrangement according to claim 1, wherein the mounting disc (20) exhibits a plurality of fourth fixation holes (26) distributed around the mounting disc through opening (22), each fourth fixation hole (26) being arranged to receive a fixation screw extending therethrough and being threadedly engaged with a corresponding internally threaded fixation hole arranged in the feed end of the spindle, around the bore.

3. A spindle liner arrangement according to claim 1 or 2, comprising a plurality of spring elements (42), each spring element being tubular and receiving the intermediate portion (44b) of a respective fixation member (44).

4. A spindle arrangement according to any of claims 1-3, wherein the narrowed portion (18b, 118b) of at least one third fixation hole (18, 118) is arranged in a recess (120) extending from an end surface of the flange member (14), which end surface faces away from the clamping disc (30) and the mounting disc (20).

5. A spindle arrangement according to claim 4, wherein said recess (120) tappers in the direction from the narrowed portion (118b) of the at least one fixation hole (118) towards said end surface and wherein the head (144c) of at least one fixation member (144) tappers correspondingly.

6. A spindle liner arrangement according to any of claims 1-5, wherein the mounting disc (20), the clamping disc (30) and the flange member (14) are annular.

7. A spindle liner arrangement according to any of claims 1-6, wherein the mounting disc through opening (22) and the clamping disc through opening (32) are circular.

## Patentansprüche

1. Spindelauskleidungsanordnung für eine Werkzeugmaschine, wie eine Drehmaschine, wobei die Werkzeugmaschine eine röhrenförmige Spindel umfasst, die eine Längsbohrung und ein Zuführungsende zum Einführen und Zuführen eines stabförmigen Werkstücks in die Bohrung aufweist, wobei die Spindelauskleidungsanordnung umfasst:
- eine Montagescheibe (20), die angeordnet ist, um an dem Zuführungsende der Spindel montiert zu sein, wobei die Montagescheibe eine zentrale Montagescheiben-Durchgangsöffnung (22), die angeordnet ist, um konzentrisch zu der Bohrung zu liegen, wenn sie montiert ist, und mehrere erste Befestigungslöcher (24), die um die Montagescheiben-Durchgangsöffnung (22) herum verteilt sind, aufweist,
- eine Klemmscheibe (30), die eine zentrale Klemmscheiben-Durchgangsöffnung (32) mit einem inneren Klemmscheibendurchmesser, der angeordnet ist, um konzentrisch zu der Bohrung zu liegen, wenn sie montiert ist, und mehrere durchgehende zweite Befestigungslöcher (34), die um die Klemmscheiben-Durchgangsöffnung (22) herum angeordnet sind, aufweist,
- eine rohrförmige Auskleidung (12), die einen ersten Längsabschnitt (12a), der angeordnet ist, um in der Bohrung aufgenommen zu sein, einen zweiten Längsabschnitt (12b), der angeordnet ist, um sich in Längsrichtung von dem Zuführungsende aus zu erstrecken, wenn sie montiert ist, und ein Flanschelement (14), das sich radial nach außen von dem zweiten Abschnitt (12b) erstreckt, umfasst, wobei
- das Flanschelement (14) mehrere durchgehende dritte Befestigungslöcher (18) aufweist, die um den zweiten Abschnitt (12b) herum verteilt sind, wobei jedes dritte Befestigungsloch (18) in der Umfangsrichtung länglich ist und einen verbreiterten Abschnitt (18a) mit einer ersten Querschnittsfläche und einen verengten Abschnitt (18b) mit einer zweiten Querschnittsfläche aufweist, die kleiner ist als die erste Querschnittsfläche (18a), und wobei die Spindelauskleidungsanordnung ferner umfasst:
- mindestens ein Federelement (42), das zwischen der Montagescheibe (20) und der Klemmscheibe (30) angeordnet ist, um die Klemmscheibe (30) in Längsrichtung von der Montagescheibe (20) wegzudrücken, und
- mehrere längliche Befestigungselemente (44), wobei jedes Befestigungselement (44) ein erstes Ende (44a), das angeordnet ist, um mit einem entsprechenden ersten Befestigungsloch (24) in Gewindeeingriff zu stehen, einen Zwischenabschnitt (44b), der angeordnet ist, um sich durch ein entsprechendes zweites Befestigungsloch (34) zu erstrecken, und ein zweites Ende umfasst, das einen Kopf (44c) mit einer dritten Querschnittsfläche umfasst, wobei die dritte Querschnittsfläche kleiner als die erste Querschnittsfläche und größer als die zweite Querschnittsfläche ist.

2. Spindelauskleidungsanordnung nach Anspruch 1, wobei die Montagescheibe (20) mehrere vierte Befestigungslöcher (26) aufweist, die um die Montagescheibe herum durch die Öffnung (22) verteilt sind, wobei jedes vierte Befestigungsloch (26) angeordnet ist, um eine Befestigungsschraube aufzunehmen, die sich durch dieses erstreckt, und mit einem entsprechenden Befestigungsloch mit Innengewinde in Gewindeeingriff steht, das in dem Zuführungsende der Spindel um die Bohrung herum angeordnet ist.

3. Spindelauskleidungsanordnung nach Anspruch 1 oder 2, umfassend mehrere Federelemente (42), wobei jedes Federelement röhrenförmig ist und den Zwischenabschnitt (44b) eines entsprechenden Befestigungselements (44) aufnimmt.

4. Spindelanordnung nach einem der Ansprüche 1-3, wobei der verengte Abschnitt (18b, 118b) mindestens eines dritten Befestigungslochs (18, 118) in einer Aussparung (120) angeordnet ist, die sich von einer Endfläche des Flanschelements (14) erstreckt, wobei die Endfläche von der Klemmscheibe (30) und der Montagescheibe (20) weg zeigt.

5. Spindelanordnung nach Anspruch 4, wobei sich die Aussparung (120) in Richtung von dem verengten Abschnitt (118b) des mindestens einen Befestigungslochs (118) zu der Endfläche hin verjüngt und wobei sich der Kopf (144c) mindestens eines Befestigungselements (144) entsprechend verjüngt.

6. Spindelauskleidungsanordnung nach einem der Ansprüche 1-5, wobei die Montagescheibe (20), die Klemmscheibe (30) und das Flanschelement (14) ringförmig sind.

7. Spindelauskleidungsanordnung nach einem der Ansprüche 1-6, wobei die Montagescheiben-Durchgangsöffnung (22) und die Klemmenscheiben-Durchgangsöffnung (32) kreisförmig sind.

## Revendications

1. Agencement de chemise de broche pour une machine-outil telle qu'un tour, laquelle machine-outil comprend une broche tubulaire présentant un alésage longitudinal et une extrémité d'alimentation pour insérer et alimenter une pièce en forme de tige dans l'alésage, lequel agencement de chemise de broche comprend :
- un disque de montage (20) agencé pour être fixé à l'extrémité d'alimentation de la broche, lequel disque de montage présente un disque de montage central traversant l'ouverture (22) agencée pour être concentrique à l'alésage lorsqu'elle est montée et une pluralité de premiers trous de fixation (24) répartis autour du disque de montage traversant l'ouverture (22),
- un disque de serrage (30) présentant une ouverture traversante (32) de disque de serrage central avec un diamètre intérieur de disque de serrage disposé de manière à être concentrique à l'alésage lorsqu'il est monté, et une pluralité de deuxièmes trous de fixation traversants (34) disposés autour de l'ouverture traversante (22) du disque de serrage,
- une chemise tubulaire (12) comprenant une première partie longitudinale (12a) agencée pour être reçue dans l'alésage, une seconde partie longitudinale (12b) agencée pour s'étendre longitudinalement vers l'extérieur à partir de l'extrémité d'alimentation lorsqu'elle est montée et un élément de bride (14) qui tend radialement vers l'extérieur à partir de la seconde partie (12b), dans laquelle
- l'élément de bride (14) présentant une pluralité de troisièmes trous de fixation traversants (18) répartis autour de la seconde partie (12b), chaque troisième trou de fixation (18) étant allongé dans la direction circonférentielle présentant une partie élargie (18a) avec une première section transversale et une partie rétrécie (18b) avec une seconde section transversale inférieure à ladite première section transversale (18a), et l'agencement de chemise de broche comprenant en outre :
- au moins un élément à ressort (42) disposé entre le disque de montage (20) et le disque de serrage (30) pour pousser le disque de serrage (30) longitudinalement à l'écart du disque de montage (20), et
- une pluralité d'éléments de fixation allongés (44), chaque élément de fixation (44) comprenant une première extrémité (44a) agencée pour être vissée dans un premier trou de fixation respectif (24), une partie intermédiaire (44b) agencée pour s'étendre à travers un second trou de fixation respectif (34) et une seconde extrémité comprenant une tête (44c) ayant une troisième zone de section transversale, laquelle troisième zone de section transversale est plus petite que ladite première zone transversale et plus grande que ladite seconde zone transversale.

2. Agencement de chemise de broche selon la revendication 1, dans lequel le disque de montage (20) présente une pluralité de quatrièmes trous de fixation (26) répartis autour de l'ouverture traversante (22) du disque de montage, chaque quatrième trou de fixation (26) étant agencé pour recevoir une vis de fixation s'étendant à travers celui-ci et étant vissé avec un trou de fixation fileté intérieurement correspondant agencé dans l'extrémité d'alimentation de la broche, autour de l'alésage.

3. Agencement de chemise de broche selon la revendication 1 ou 2, comprenant une pluralité d'éléments à ressort (42), chaque élément à ressort étant tubulaire et recevant la partie intermédiaire (44b) d'un élément de fixation respectif (44).

4. Agencement de broche selon l'une quelconque des revendications 1 à 3, dans lequel la partie rétrécie (18b, 118b) d'au moins un troisième trou de fixation (18, 118) est agencée dans un évidement (120) s'étendant à partir d'une surface d'extrémité de l'élément formant bride (14), laquelle surface d'extrémité est détournée du disque de serrage (30) et du disque de montage (20).

5. Agencement de broche selon la revendication 4, dans lequel ledit évidement (120) s'effile dans la direction allant de la partie rétrécie (118b) dudit au moins un trou de fixation (118) vers ladite surface d'extrémité et dans lequel la tête (144c) d'au moins un élément de fixation (144) s'effile de manière correspondante.

6. Agencement de chemise de broche selon l'une quelconque des revendications 1 à 5, dans lequel le disque de montage (20), le disque de serrage (30) et l'élément formant bride (14) sont annulaires.

7. Agencement de chemise de broche selon l'une quelconque des revendications 1 à 6, dans lequel l'ouverture traversante de disque de montage (22) et l'ouverture traversante de disque de serrage (32) sont circulaires.
